# EUROPEAN PATENT APPLICATION

(11) **EP 0 583 933 A1**
(43) Date of publication of application: **23.02.1994**
(21) Application number: 93306326.5
(22) Date of filing: 11.08.1993
(51) Int. Cl.: B62J 11/02, F04B 33/00

(54) **Improved cycle hand pump**

(30) Priority: 17.08.1992 GB 9217473; 22.03.1993 GB 9305933
(71) Applicant: Stoker, Derek, Methley, Leeds LS26 9EG (GB)
(72) Inventor: Stoker, Derek, Methley, Leeds LS26 9EG (GB)
(74) Representative: Attfield, Donald James

(57) **Abstract**

Hand pump (1) for a cycle tyre (29) comprises a hollow tubular body (2) containing a piston (10) and associated piston rod (9) and handle (8) for compressing air into the closed end (3) of the body. A compressed air outlet (6) extends radially of the body (2) adjacent the closed end (3) and means (11) are secured to the said closed end for releasably engaging a frame member (23) of the cycle whereby pumping pressure may be applied in a generally downward direction against the said frame member (23).

## Description

The present invention relates to an improved form of hand pump for inflating the tyres of bicycles.

Conventional hand pumps used for inflating bicycle tyres have long been recognised as unsatisfactory. In such pumps the pressure applied with one hand at the handle is transferred to the lower end of the pump gripped in the other hand making the operation difficult. As the pressure in the tyre increases so the process becomes more arduous. Furthermore a significant degree of heat is generated at the lower end of the pump making it very uncomfortable to hold. Additionally there are problems with a stability of the average bicycle while a tyre is being inflated, the posture of the person handling the pump is poor, for example it is frequently necessary to adopt a crouching or semi-kneeling position and, because of the high pressures required, to achieve a satisfactory performance from the tyre, women and children in particular have great difficulty in inflating tyres to the required pressure.

The high pressure required limits the diameter and capacity of bicycle hand pumps in present use, generally such pumps have a diameter of only about 3/4'' (19mm) which provides a piston area of only about 0.5 sq.in (283 sq.mm).

I have now developed an improved form of hand pump for inflating bicycle tyres that seeks to overcome the aforementioned problems and also enables pumps with increased piston areas to be employed, which is particularly important for inflating the tyres of the now popular mountain bike.

The hand pump of my invention comprises a cylinder formed from a hollow elongate body having a closed lower end, a piston secured to one end of a piston rod contained within the body and that extends through a guide releasably secured in the upper end of the body enabling the piston to be moved between the said upper end of the body and a position adjacent the lower closed end thereof, a compressed air outlet extending radially of the body adjacent the closed lower end and adapted for connection to an air hose, an operating handle secured to the other end of the piston rod, and wherein there is provided means secured to the lower end of the body for releasably engaging a substantially horizontal frame member of a bicycle, whereby pumping pressure may be applied in a generally downward direction against the said means and frame member.

Preferably a resilient member, such as a coil spring, is contained in the lower end of the body to prevent the piston from passing beyond the air outlet.

The said means for engaging the frame is preferably C-shaped in cross section and formed from a resilient material such that it may be clipped on and off the frame member.

Since pressure is applied through the frame engaging means against the frame member, substantially greater pressure may be applied to the pump handle enabling a piston of increased diameter to be used. Additionally since only one hand is required to operate the pump and pressure is generally applied to a lower frame member, stability of the bicycle during tyre inflation is improved as is the posture of the person using the pump.

One embodiment of the invention will now be described with reference to the accompanying drawings in which:-
Figure 1 is a diagrammatic representation of a hand pump of the present invention:
Figure 2 is a diagrammatic representation of a side view of a rear portion of a bicycle frame.
Figure 3 is a diagrammatic perspective view of the portion of the bicycle frame of Figure 2, and use of the pump of Figure 1 to inflate a tyre and,
Figure 4 is a representation of a suitable air hose for use with the pump of Figure 1.

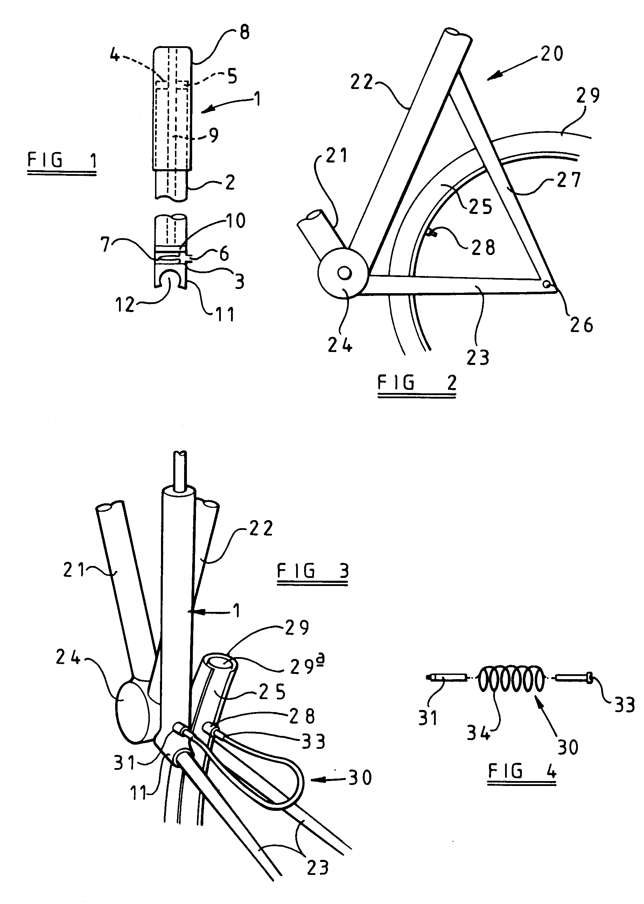

Referring to Figure 1 a hand pump, generally indicated at 1, comprises a hollow tubular body portion 2, which may be formed from metal or a plastics material, having a closed end 3 and an open end 4. The upper portion of end 4 is internally screw threaded to receive a correspondingly screw threaded guide 5. A piston 10 is contained with body 2 and is attached to one end of piston rod 9 which extends through guide 5 and is secured at its other end to pump handle 8. Handle 8 is dimensioned to slide over body 2 when the piston is in its lowermost position close to the closed end 3 of body 2. An air outlet 6 extends radially from the bottom portion of body 3 and a coil spring 7 is provided to prevent piston 10 from travelling past outlet 6 during pumping. Secured to the end 3 of pump 1 is a clamp member 11 having an open C-section 12 and formed of a resilient plastics material.

Referring now to Figures 2, 3 and 4, a bicycle 20 comprises frame members 21, 22 extending from pedal hub 24 and chain stay members 23, extending from member 22 and hub 24 to provide means 26 in which the hub of rear wheel 25 is located. Wheel 25 includes an outer cover 29 and an inner tube 29a having a valve 28 extending through 20 the wheel rim. When tyre 29 is required to be inflated pump 1 is positioned such that clamp 11 clips on to chain stay 23 and the pump held in a substantially vertical position. A stretchable air hose 30, having end portions 31 and 33 joined by a coil portion 34, connects pump to the tyre with end 31 engaging in outlet 6 and end 33 engaging with the valve 28 making airtight connections therewith.

Because the pump is clipped onto chain stay 23 pressure may be applied vertically on handle 5 with one hand and the other hand of the user can, if necessary, be used to steady the bicycle frame. Since it is not necessary to hold the lower end of the pump any discomfort occasioned by heat generation is no longer present and, additionally, maximum pressure can be exerted on the handle with the ultimate downward pressure being taken on chain stay 23.

The bicycle frame provides a secure base to support pumping pressure and is not generally affected by differing ground surfaces, e.g. grass, soft surfaces and uneven surfaces which cause problems with foot and stirrup pumps.

Although member 11 is shown as having a C-shaped cross-section, it may take convenient shape provided that it can engage a frame member in a manner that enables pressure to be applied through the pump to the said member. Member 11 may be integral with the pump body for example in a plastic moulding, or it may be a separate element secured to the said body by any suitable means.

## Claims

1. A hand pump (1) for inflating bicycle tyres (29) comprising: a cylinder formed from a hollow elongate body (2) having a closed end (3), a piston (10) secured to one end of a piston rod (9) and located within the body (2), an operating handle (8) secured to the other end of the piston rod (10), said piston rod extending through a guide (5) releasably secured in the other end (4) of the body (2) whereby the piston (10) can be moved between the said other end (4) of the body (6) and a position adjacent the said closed end (3) thereof to compress air therein and an outlet (6) for compressed air extending radially of the body (2) adjacent the closed end (3) and adapted for communication to an air hose (30) characterised in that there is provided means (11) secured to the said closed end (3) of the body (2) for releasably engaging a frame member (23) of a bicycle (20) whereby pumping pressure may be applied in a generally downward direction against the said means (11) and said frame member (23).

2. A pump according to claim 1 wherein said means (11) for engaging a frame member is C-shaped in cross section and formed from a resilient material whereby it may be clipped on and off the frame member (23).

3. A pump according to claim 1 or claim 2 wherein the said means (11) for engaging the frame (23) is integral with the pump body (2).
